Europäisches Patentamt

European Patent Office

Office européen des brevets

(11) Publication number: **0 462 340 A1**

## EUROPEAN PATENT APPLICATION

(21) Application number: 90306803.9

(22) Date of filing: 21.06.90

(51) Int. Cl.5: **H02K 25/00**, H02K 23/62

(43) Date of publication of application:
27.12.91 Bulletin 91/52

(84) Designated Contracting States:
AT BE CH DE ES FR GB GR IT LI NL SE

(71) Applicant: Shlien, David J.
6716 Leland Way
Hollywood, California 90028(US)

(72) Inventor: Shlien, David J.
6716 Leland Way
Hollywood, California 90028(US)

(74) Representative: Crawford, Andrew Birkby et al
A.A. THORNTON & CO. Northumberland
House 303-306 High Holborn
London WC1V 7LE(GB)

(54) Direct current motor.

(57) A direct current machine construction in which the rotor includes a permanent magnet (10) with the stator (50) including field winding energizable from a direct current source. In a first embodiment first and second stationary slip rings (26,27) are connected to an external direct current source. Coupled for rotation with the shaft are to first and second brush assemblies with brushes (18,20) which are spring biased and protrude radially outwardly from the rotor shaft (12). The commutator for the field windings is stationary relative to the housing and includes a plurality of commutator segments (32) positioned intermediate the slip rings (26,27) and in a cylindrical manner facing inwardly toward, and for contact with, the commutator brushes (18,20). The field windings are on the stator (50) with the winding leads windings being accessible externally of the stator for enabling switching devices to be utilized for changing of the number of turns of the stator windings for thereby varying the motor characteristics, as needed. The switching devices may be mechanical switch devices or static semiconductor switch devices. In a second embodiment, commutation is effected by non-contact position sensing devices, such as encoder wheels, optical devices and the like, operable in response to a rotating device keyed to the rotor shaft, which device is positioned for electromagnetic accuracy relative to the pole positions of the stator of the machine. Other embodiments are disclosed. With accessible external leads, the machine may be alternately used as both a propulsion motor and generator in the same device for returning power to the direct current source.

FIG. 1

## BACKGROUND OF THE INVENTION

The background of the invention will be discussed in two parts.

Field of the Invention

This invention relates to motors or generators, and more particularly, to a direct current machine . employing a rotating permanent magnet electromagnetically coacting with windings in the stator.

Description of the Prior Art

Direct current motors of conventional design employ a stator with a field winding connectable to a power source, and a rotor with a plurality of windings connectable, via a commutator, to a power source. The commutator is coupled to the rotor shaft for rotation therewith and alternates the polarity of the applied direct current to the rotor windings to thus change the electromagnetic polarity of the rotor windings relative to the stator windings.

Some prior art direct current motors employ permanent magnets in either the stator or rotor structure. One such motor is shown and described in U.S. Patent No. 3,419,740, entitled "Self Commutated Direct Current Motor with Permanent Magnet Rotor", such patent issuing to Dotto on December 31, 1968. The motor includes a permanent magnet rotor and a stator including a plurality of field windings. Commutation of the field windings is effected through first and second brushes coupled to the field windings and actuable by a commutator coupled to the rotor shaft.

In accordance with an aspect of the invention, it is accordingly an object of the invention to provide a new and improved direct current machine having a permanent magnet rotor with a stator having winding sets. The winding sets have ends of individual windings connected to a switch with a new and improved commutator arrangement effecting polarity changes through the switch to thereby control the operating characteristics of the machine.

## SUMMARY OF THE INVENTION

The foregoing and other objects of the invention are accomplished by providing a direct current machine construction in which the rotor includes a permanent magnet with the stator including field winding energizable from a direct current source. In a first embodiment first and second stationary slip rings are connected to an external direct current source. Coupled for rotation with the shaft are to first and second brush assemblies with brushes which are spring biased and protrude radially outwardly from the rotor shaft. The commutator for the field windings is stationary relative to the housing and includes a plurality of commutator segments positioned intermediate the slip rings and in a cylindrical manner facing inwardly toward, and for contact with, the commutator brushes. The field windings are on the stator with the winding leads windings being accessible externally of the stator for enabling switching devices to be utilized for changing of the number of turns of the stator windings for thereby varying the motor characteristics, as needed. The switching devices may be mechanical switch devices or static semiconductor switch devices.

In a second embodiment, commutation is effected by non-contact position sensing devices, such as encoder wheels, optical devices and the like, operable in response to a rotating device keyed to the rotor shaft, which device is positioned for electromagnetic accuracy relative to the pole positions of the stator of the machine. With accessible external leads, the machine may be alternately used as both a propulsion motor and generator in the same device for returning power to the direct current source.

In yet another embodiment, the commutation is effected via a cam and tappet arrangement, with the tappets actuating contact bars. A still further embodiment includes a switch arm coupled for rotation with the rotor to operate against spring loaded contact mechanisms.

Other objects, features and advantages of the invention will become readily apparent from a reading of the specification, when taken in conjunction with the drawings, in which like reference numerals refer to like elements in the several views.

## BRIEF DESCRIPTION OF THE DRAWINGS

Figure 1 is an exploded perspective view showing a first embodiment of the direct current machine according to the invention;

Figure 2 is an exploded perspective view of an alternate embodiment of a direct current machine according to the invention;

Figure 3 is an exploded partial perspective view of an alternative commutation arrangement for use in the machine of Figure 2;

Figure 4 is an exploded partial perspective view of still another commutation arrangement for use in the motor of Figure 2;

Figure 5 is a front view of a cam and tappet arrangement of an alternate commutation arrangement;

Figure 6 is a side elevational view of the arrangement of Figure 5;

Figure 7 is a diagrammatic view of a contact bar assembly for use with the cam and tappet arrangement of Figures 5 and 6;

Figure 8 is a side elevational view of one contact bar switching mechanism used in the contact bar arrangement of Figure 7;

Figure 9 is a diagrammatic view of an alternate commutator arrangement in which an arm engages opposing switch mechanisms; and

Figure 10 is an enlarged view of a switch arrangement used in the embodiment of Figure 9.

## DESCRIPTION OF THE PREFERRED EMBODIMENT

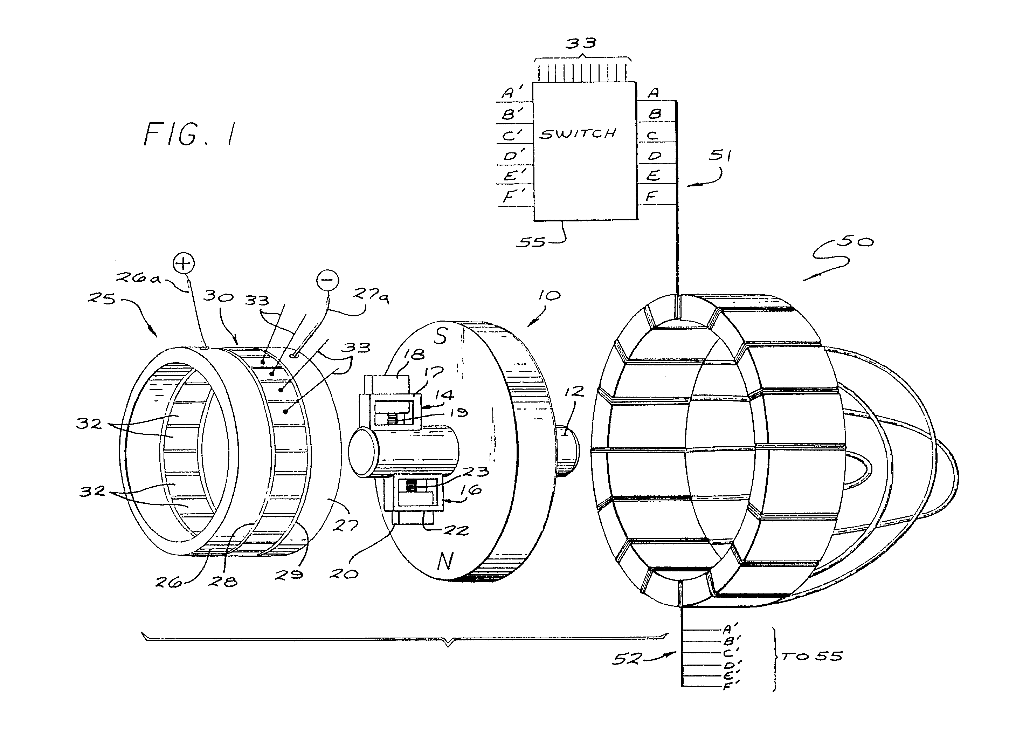

Referring now to the drawings, and particularly to Figure 1, there is shown an exploded perspective view of the components of a direct current machine, such as a motor, in accordance with the invention. The motor housing has been eliminated to show the interior components, which include a rotating permanent magnet 10, carried on a shaft 12. The rotor magnet 10 has been selected as a two pole rotor since, as will become apparent, such a motor lends itself to the operation as a stepping motor or a synchronously operating motor.

Coupled to the shaft 12 are first and second diametrically opposed commutator brush assemblies, generally designated 14, 16. Each of the brush assemblies is generally identical and by reference to brush assembly 14, includes a generally rectangular housing 17 configured for slidably receiving a brush member 18 therein with a spring bias member 19 within the housing 17 urging the brush member 18 radially outwardly. Similarly, the brush assembly 16 includes a brush member 20 within a housing 22, with a spring bias member 23 urging the brush member 20 radially outwardly. The brush assemblies 14 and 16 are assembled on shaft 12 with the upper (as viewed in the drawings) brush assembly 14 being axially offset from the lower assembly 16 in a direction away from the rotor magnet 10. The purpose of this offset will be discussed hereafter in connection with the construction of the commutator, generally designated 30.

The brushes 18, 20 of the commutator brush assemblies 14, 16, engage an electrical current transfer assembly, generally designated 25, which includes first and second slip rings 26, 27 and a commutator, generally designated 30, the transfer assembly 25 being constructed for attachment in fixed relation to the housing, and, hence, the stator. As will become apparent, the commutator 30 of this invention is basically an inside-out version of a traditional commutator, and, further, it will become apparent that the components are functioning in the reverse of a conventional direct current motor, that is, the field windings of the stator act as the armature in a conventional motor.

The commutator 30 is configured in a cylindrical array of inwardly facing arcuate (in cross-section) commutator segments 32, separated by intervening insulation segments 33, the number of commutator segments 32 corresponding to twice the number of discrete winding sets in the field windings of the stator (or armature), generally designated 50. Each commutator segment 32 has connected thereto on the exterior thereof, a lead wire 33, only three of which are shown, with these lead wires being connected to the windings of the stator 50 or to an intermediate switch device, which will be described hereinafter.

Secured to the commutator 30, on either side thereof, are first and second slip rings, 26, 27, which are electrically insulated from the commutator 30 by insulation rings 28 and 29, yet secured in concentric abutting relation therewith. The internal surface of each of the slip rings 26, 27 is of the same internal diameter, and of the same internal diameter as the internal diameter of the commutator 30. The slip rings 26 and 27 receive direct current from an external source, such as a battery though electrical leads 26a and 27a, respectively connected thereto. The external direct current source can be a storage battery (not shown), the polarity of which is designated by "+" and "-" in circles adjacent the ends of leads 26a, 27a.

As assembled, the brushes 18 and 20 of the brush assemblies 14 and 16 abuttingly contact and ride against the inner surface of the electrical current transfer assembly 25. Because of the axial offset of brush assembly 14 relative to assembly 16, the following occurs - the upper brush assembly 14 makes electrical contact with only the axially outer slip ring 26 and the commutator segments 32 of the commutator 30. The lower brush assembly 16 makes electrical contact only with the inner slip ring 27 and the segments 32 of the commutator 30. Thus, for a given position of the brushes 18 and 20 relative to the transfer assembly 25, current enters from the positive terminal (+) of the battery through the slip ring 26, then through the brush 18 which bridges the insulation 28 to contact both the slip ring 26 and the adjacent commutator segment 33, but not the slip ring 27. This current then flows through the connected windings of the stator, generally designated 50, in a manner to be described. The current from the stator windings returns through the diametrically opposite commutator segment 33 of commutator 30, thence through the brush 20, which spans or bridges the insulation 29 between the segment 33 and the adjacent slip ring 27, and then to the negative pole of the power source.

The stator 50 is wound in a conventional manner, that is, it includes a generally cylindrical ferromagnetic core of generally conventional configuration with slots or spaces for receiving the windings therein. However, the winding sets are arranged for termination externally to an intermediate switch device, shown schematically and designated 55. The terminal ends of the winding leads are shown in two sets, generally designated 51 and 52. Six leads are shown, with the leads of set 51 being designated by reference characters "A", "B", "C", "D", "E", and "F". Similarly, the leads of set 52 are designated with the same reference characters followed by a prime ('), that is "A'", "B'", etc.

The switch is shown as a block 55, with the leads 33 from the commutator coming into the switch 55. On the opposing sides of switch 55, the winding leads A-F of set 51 and the winding leads A'-F' of set 52 are connected to the switch 55. The switch 55 can be a ganged two pole switch capable of handling the number of lead terminations from the windings and commutator segments for enabling switching of the windings of the stator 50 from series connected to parallel connected, or for changing the number of turns in a winding, as desired. Alternative switch arrangements may be utilized for various purposes, such as to change the number of poles on the stator if desired, or to couple two windings in series or the like, all consistent with the characteristics desired for the motor.

In effect, with the motor of the above construction, unlike conventional direct current motors, the commutator itself is not rotating. In a prior art conventional motor, the commutator is used with the rotor, which is also referred to as the armature. In a conventional motor, the windings are on the armature, which is rotating. Windings on the rotating armature are susceptible to damage occasioned by centrifugal forces.

However, in the motor of the instant invention, the commutator acts in conjunction with the windings on the stator, which, in this configuration, acts as a non-rotating armature. Since this armature is not rotating, it is then easy to manipulate the turns ratio of the windings which have the lead sets 51 and 52 terminating external to the housing, and thus, readily controllable. By controllably varying the number of turns of the windings, the operating characteristics of the motor (or generator) may be dynamically controlled. Instead of having a series of commutators, all that is needed is a multipole ganged switch, a rotary switch or any other kind of switch, including utilization of controllable semiconductor switches, and you can switch the number of turns in the armature or stator 50, which does not rotate.

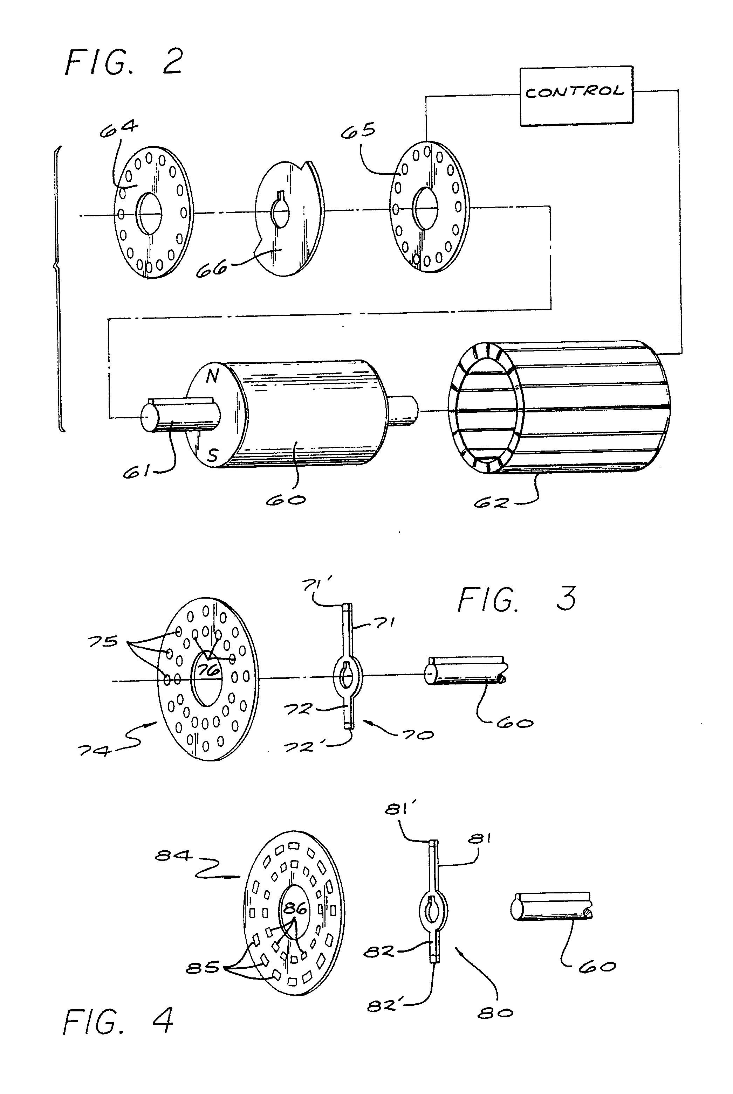

Figure 2 shows an alternate embodiment of a motor in accordance with the invention, in which the rotor 60 is a cylindrically configured two pole permanent magnet which rotates within a stator 62, which is configured like stator 50 with the leads terminating external to the housing for switching. Commutating is effected in a non contacting manner, with a photo-optical arrangement including first and second disks, 64, 65 with an intervening mask 66. The mask 66 is keyed to the shaft 61 of the rotor 60, for rotation therewith. The two disks 64 and 65 have central apertures for passage of the rotor shaft 61 therethrough, with discs 64 and 65 being mounted in close proximate parallel relation with mask 66, disk 64 being mounted to the left of mask 66 and disk 65 being mounted to the right thereof. The two disks are mounted stationary relative to the housing in any convenient manner. Disk 64 acts as a substrate which contains a plurality of equiangularly positioned light emitting diodes, while disk 65 acts as a substrate which has assembled thereto a like number of equiangularly positioned phototransistor devices in aligned relation with the corresponding light emitting diode. The number of diodes on disk 64 and light sensing transistors on disk 65 would essentially correspond to the number of commutator segments required in the motor, such as the segments 32 of commutator 30. The light emitting diodes of disk 64 would be connected to a suitable d.c. source, and the leads from phototransistors on disk 65 would be connected to a suitable control circuit. The mask 65 may take any convenient configuration for interrupting or providing selective energization of the phototransistors of disk 65 in a sequence determined by the mask 65. In this instance, the mask 65 has an arcuate segment of about 180 degrees removed, thus masking one half of the light paths at a time. This thereby provides a brushless motor which can be operated for either synchronous stepping or sparkless operation.

Also, in accordance with the instant invention, by selecting the proper coils for the armature, the static armature, the motor can be used in an alternator mode and put out either single phase, split phase or three phase, or however many phases are desired either for rectification and infiltration where the device can be 20 or more simultaneous phases, with each phase shifted a slight angle relative to the next to provide very smooth and easily filtered direct current. One may configure coils separated by 120 degrees to get three phases, or whatever need for the particular transformer.

The motor of the present invention is particularly well suited to automotive use whereby the static armature and static commutator arrangement enables easy switching for speed control or charging rate control, depending on whether the vehicle is speeding up or slowing down and, thereby renders it possible to utilize the device for propulsion. With proper switching, and storage battery operation, the device may be utilized as a propulsion motor, and, when conditions permit, such as during movement downhill, the device may be used for braking while returning power to the battery. In effect, during downhill operation, the device acts as a deriving power from the force of gravity. This is particularly true of the motor of Figure 1, in which the slip ring and commutator arrangement could readily handle the power for such uses, and the brushes make it virtually 100% efficient with respect to transfer of power from the device to the battery.

Figure 3 shows another alternate commutator arrangement in which shaft position sensing is accomplished via a member, generally designated 70, keyed to shaft 60 for rotation therewith, the member 70 having pair of diametrically opposed arms 71 and 72, each having a ferromagnetic or iron slug 71', 72', respectively, at the end thereof. One arm 70 is longer than the other arm 71. A stationary disc member 74 is mounted to the housing in proximate relation to the rotating member 70, the disk member 74 including an outer circle 75 of proximity coils and an inner circle 76 of proximity coils, the coils of each circle being arranged circumferentially and in equiangular orientation thereon. The slug 71' coacts with the outer circle 75 while the slug 72' coacts with the inner circle 76. Although not shown, it is to be understood that the proximity coils of the circles 75 and 76 would be connected to external circuitry, such as a switch device, for interconnection to the windings of the stator.

Still another commutator arrangement is shown in Figure 4, which is similar to that of Figure 3. In Figure 4, however, capacitance coupling is effected, with a rotating member, generally designated 80, rotatably coupled to rotor shaft 60. The member 80 includes diametrically opposed arms 81, 82, with grounded capacitive plates 81', 82', at the ends thereof. A stationary disc member 84 is mounted to the housing in proximate relation to the rotating member 80, the disk member 84 including an outer circle 85 of capacitive plates and an inner circle 86 of capacitive plates, the plates of each circle being arranged circumferentially and in equiangular orientation thereon. The grounded plate 81' coacts with the outer circle 85 of capacitive plates, while the grounded plate 82' coacts with the inner circle 86 of capacitive plates. Although not shown, it is to be understood that the capacitive plates of the circles 85 and 86 would be connected to external circuitry for interconnection to the windings of the stator.

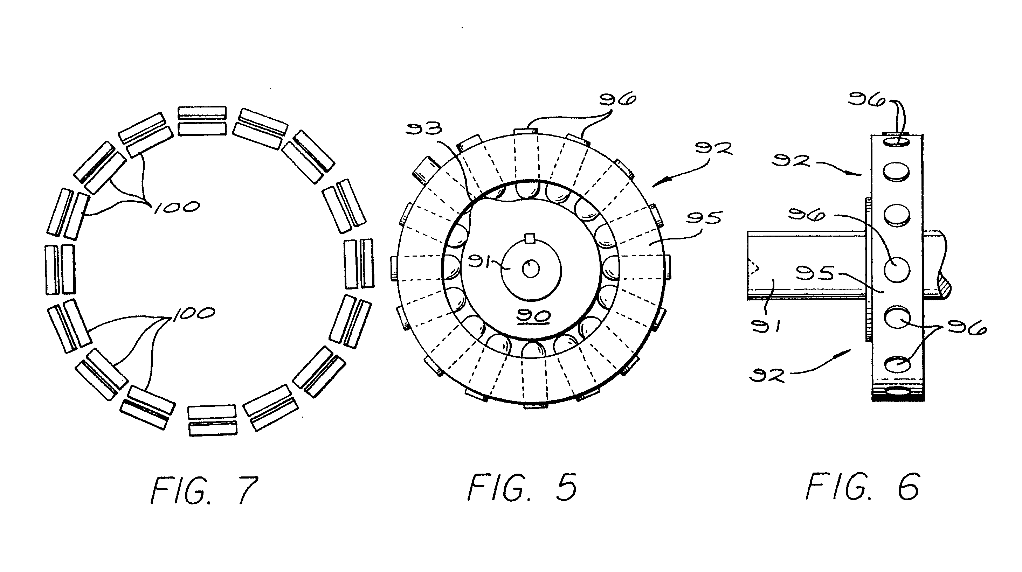

Figures 5 through 8 depict yet another alternate commutator arrangement in which shaft position sensing is accomplished via a cam arrangement which includes a cam member, generally designated 90, rotatable within a tappet array, generally designated 92. The cam member 90 is keyed to shaft 91 for rotation therewith, the member 90 having a cam lobe 93. The tappet array 92 includes a stationary ring member 95 which is fixed in coaxial relation with the rotor. The ring 95 is suitably configured for slidably maintaining therein a plurality of equiangularly positioned radially displaced tappets 96, each of which is normally spring biased radially inward. As the cam lobe 93 engages a tappet 96, the tappet 96 is urged radially outwardly against the force of its spring. The tappets 96 are formed of a non-conductive material, such as a self-lubricating plastic material.

Upon actuation, the tappet 96 operates against a contact bar switch array 99, which is shown diagrammatically in Figure 7. The cam 90 and tappet array 92 are dimensioned for positioning within the inner opening of the contact bar switch array 99, the array 99 including a plurality of identically configured contact bar switches, generally designated 100, the contact bar switches being equal in number to the number of tappets 96. The contact bar switches 100 are arranged about a circumference of a circle having a diameter slightly greater than the outer diameter of the ring member 95 of the tappet array 92.

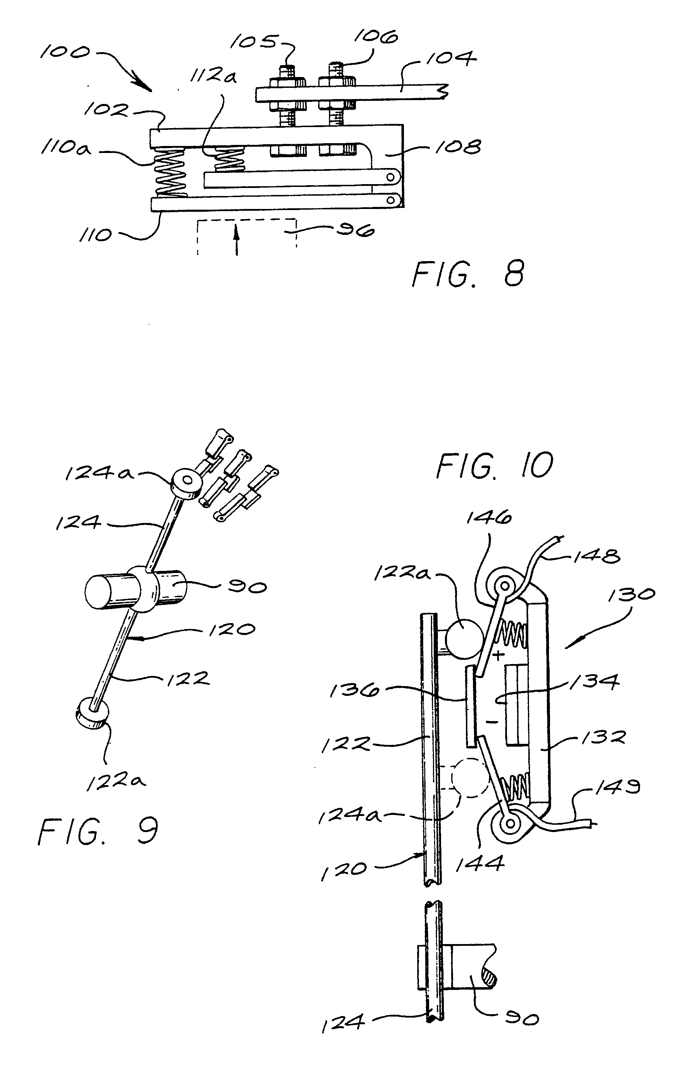

Figure 8 is an enlarged view of the contact bar switch 100, which includes a switch block 102, formed of a non-conductive material, such as nylon. The block 102 is coupled by to a stationary mounting member 104 by means of suitable fasteners, such as nut and bolt members 105, 106. The switch block 102 has a pivot arm portion 108, which is perpendicular to the body thereof at an end thereof, the arm portion 108 being configured for pivotally supporting first and second spaced electrically conductive contact bars 110, 112. The main body portion of the switch block 102 is generally bar-shaped, with each of the contact bars 110, 112 being similarly configured. Contact bar 110 has about the same length as the body of the switch block 102. The contact bar 112 is slightly shorter. The contact bars 110, 112 are pivotally supported at one end on arm 108 in spaced generally parallel relation to one another and to the undersurface of the body of block 102. The other ends of the contact bars 110, 112 are urged in a counterclockwise direction (as viewed in the drawing) by coil springs 110a, 112a, which serve as return springs. Although not shown, each of the contact bars is connected to an appropriate electrical conductor for connection to the switch 55.

In operation, as the cam 90 rotates, each tappet 96 is, in turn, displaced radially outwardly (as indicated by the arrow thereon in Figure 8). The tappet then urges against the lower or outer contact bar 110, which is then urged against the force of its spring 110a into electrical contact with the inner contact bar 112, which urges slightly against the force of its spring 112a, it being understood that the switch block 102 remains stationary. This then provides commutation for the motor device.

Figures 9 and 10 depict yet another commutation arrangement, wherein a member 120 is coupled for rotation with shaft 90, the member 120 having a pair of diametrically opposed arms 122 and 124, each having a roller 122a, 124a, respectively, at the end thereof. One arm 122 is longer than the other arm 124. A stationary switch contact array is mounted to the housing in proximate relation to the rotating member 120, the array (not shown) including a plurality of circumferentially arranged radially oriented switch contact devices 130. The switch device has a positive (+) portion and a negative (-) portion, one portion of which is positioned for coaction with arm 122 and the other portion of which is positioned for coaction with arm 124.

As more clearly shown in Figure 10, the switch contact device 130 includes a support plate in the form of an insulated support block 132 which may be, for example, a ring-shaped plate positioned coaxial with the shaft 90. A stationary conductive contact member 134 is secured to one surface of the block 132. The inner and outer portions of the block 132 are configured for pivotally supporting one end of first and second conductive bar-shaped contact members 142, 144, each of which is provided with an electrical lead 148, 149, respectively. The contacts 142, 144 are normally biased away from the stationary contact member 134 by coil spring members 142a, 144a, respectively. The outward pivoting is limited by a stationary insulated retainer block 136 which contacts the free ends of the contacts 142, 144. Although not shown, the retainer 136 is secured in a stationary position relative to the block 132. Alternately, the ends of block 132 adjacent the pivots of contacts 142, 144 may be configured for coaction with the contacts to limit outward pivoting thereof.

In operation, as the arm 120 rotates, roller 122a of longer arm 122 will contact the outer positive switch portion, that is, the roller 122a will engage and depress contact 142 into engagement with stationary contact 134. At the opposite end of arm 120, that is 180 degrees apart, the roller 124a (shown in dotted lines) of the second shorter arm 124 will contact the inner negative switch portion, that is, the roller 124a will engage and depress contact 144 into engagement with stationary contact 134. As a result, a negative switch portion and a positive switch portion will be simultaneously contacted to complete the winding set electrical connection.

Thus, it can be seen that the commutator arrangements of Figures 2, 3 and 4 provide for brushless, sparkless operation of the motor device according to the invention. The other embodiments demonstrate other commutator arrangements which may conveniently be employed in accordance with the instant invention. While there have been shown and described preferred embodiments, it is to be understood that various other adaptations and modifications may be made within the spirit and scope of the invention.

**Claims**

1. In a direct current machine, the combination comprising a permanent magnet rotor means having a rotor shaft; commutator means; switch means; stator means including a plurality of poles, each pole including a winding set of a plurality of windings with the ends of at least some of the windings being electrically connected to said switch means; and means interconnecting said commutator means and said switch means for enabling varying the interconnection of said windings for varying the turns ratio of the winding set whereby to alter the operating characteristics of said machine.

2. The machine according to claim 1 wherein said commutator means includes at least first and second radially outwardly extending brush means connected for rotation with said rotor means, first and second stationary slip rings and a stationary group of commutator segments arranged in a cylindrical configuration, and wherein said brush means, said slip rings and said commutator segments are positioned, configured and arranged for enabling said first brush means to simultaneously contact a commutator segment and said first slip ring, and for enabling said second brush means to simultaneously contact a different commutator segment and said second slip ring.

3. The machine according to claim 2 wherein there are two brush means arranged on said rotor shaft in diametrical relation.

4. The machine according to claim 3 wherein said commutator segments are intermediate and in proximate relation to said first and second slip rings, and one of said brush means is axially offset relative to the other along said rotor shaft.

5. The machine according to claim 1 wherein said commutator means includes optical sensing means.

6. The machine according to claim 5 wherein said optical sensing means includes a stationary array of light emitting devices, a stationary corresponding array of light sensing devices connected to said switch means, and means intermediate said arrays, said intermediate means being connected for rotation with said rotor means and configured for enablement of selected ones of said light sensing devices.

7. The machine according to claim 1 wherein said commutator means includes shaft position means coupled for rotation with said rotor shaft and stationary sensing means in spaced proximate non-contacting relation to said shaft position means.

8. The machine according to claim 7 wherein said shaft position means includes a member with diametrically opposed arm portions.

9. The machine according to claim 8 wherein said stationary sensing means includes first and second coaxial circumferential arrays of sensing devices and wherein said opposed arm portions are of different length, one of said arm portions coacting with one of said circumferential arrays and the other of said arm portions coacting with the other of said circumferential arrays.

10. The machine according to claim 7 wherein said sensing means includes optical emitting and sensing means.

11. The machine according to claim 10 wherein said optical emitting means includes an array of light emitting devices and said optical sensing means includes a like configured array of photosensitive devices and wherein said shaft position means includes mask means intermediate said light emitting device and said photosensitive devices for enabling selective sequential response from said photosensitive devices.

12. The machine according to claim 7 wherein said sensing means includes proximity detection means.

13. The machine according to claim 12 wherein said stationary sensing means includes first and second coaxial circumferential arrays of proximity coils on a common substrate, and wherein said opposed arm portions are of different length with each of said arm portions including a metallic slug means at the end thereof, one of said slug means coacting with one of said circumferential arrays and the other of said slug means coacting with the other of said circumferential arrays.

14. The machine according to claim 7 wherein said sensing means includes capacitive coupling means.

15. The machine according to claim 14 wherein said stationary sensing means includes first and second coaxial circumferential arrays of capacitive plate means and wherein said opposed arm portions are of different length with each of said arm portions having a capacitor plate member at the end thereof, one of said capacitor plate members coacting with one of said circumferential arrays and the other of said capacitor plate members coacting with the other of said circumferential arrays.

16. The machine according to claim 1 wherein said commutator means includes cam means coupled for rotation with said shaft, a plurality of contact means arranged in a circumferential array and means intermediate said cam means and said switch means for selectively actuating said contact means.

17. The machine according to claim 16 wherein said intermediate means includes tappet means.

18. The machine according to claim 17 wherein said cam means includes a cam member having a cam lobe.

19. The machine according to claim 18 wherein each of said contact means includes first and second conductive contact bars actuated into contacting engagement by said tappets.

20. The machine according to claim 1 wherein said commutator means includes a switch array and a member coupled for rotation with said shaft, said member having first and second diametrically opposed arms of different lengths, said switch array having first and second portions actuable by said first and second arms, respectively.

21. In a direct current machine, the combination comprising a permanent magnet rotor means having a rotor shaft; stator means including a plurality of poles, each pole including a plurality of winding sets with a plurality of windings with ends; at least first and second radially outwardly extending brush means connected for rotation with said rotor means; first and second stationary slip rings and a stationary group of commutator segments collectively arranged in a cylindrical configuration, said brush means, said slip rings and said commutator segments being positioned, configured and arranged for enabling said first brush means to simultaneously contact a commutator segment and said first slip ring, and for enabling said second brush means to simultaneously contact a different commutator segment and said second slip ring; and means electrically interconnecting said commutator segments and said ends of said windings for varying the turns ratio of said winding sets whereby to alter the operating characteristics of said machine.

22. The machine according to claim 21 wherein there are two brush means arranged on said rotor shaft in diametrical relation.

23. The machine according to claim 22 wherein said commutator segments are intermediate and in proximate relation to said first and second slip rings, and one of said brush means is axially offset relative to the other along said rotor shaft.

24. The machine according to claim 21 wherein said means electrically interconnecting said commutator segments and said ends of said windings includes switch means.

25. In a direct current machine, the combination comprising a permanent magnet rotor means having a rotor shaft; stator means including a plurality of poles, each pole including a winding set having a plurality of windings with ends; shaft position sensing means connected for rotation with said rotor means; stationary sensing means in spaced proximate non-contacting relation to said shaft position means; and means electrically interconnecting said sensing means and said ends of said windings for enabling varying the turns ratio of said winding sets.

26. The machine according to claim 25 wherein said shaft position means includes a member with diametrically opposed arm portions.

27. The machine according to claim 26 wherein said stationary sensing means includes first and second coaxial circumferential arrays of sensing devices and wherein said opposed arm portions are of different length, one of said arm portions coacting with one of said circumferential arrays and the other of said arm portions coacting with the other of said circumferential arrays.

28. The machine according to claim 25 wherein said sensing means includes optical emitting and sensing means.

29. The machine according to claim 28 wherein said optical emitting means includes an array of light emitting devices and said optical sensing means includes a like configured array of photosensitive devices and wherein said shaft position means includes mask means intermediate said light emitting device and said photosensitive devices for enabling selective sequential response from said photosensitive devices.

30. The machine according to claim 25 wherein said sensing means includes proximity detection means.

31. The machine according to claim 30 wherein said stationary sensing means includes first and second coaxial circumferential arrays of proximity coils on a common substrate, and wherein said opposed arm portions are of different length with each of said arm portions including a metallic slug means at the end thereof, one of said slug means coacting with one of said circumferential arrays and the other of said slug means coacting with the other of said circumferential arrays.

32. The machine according to claim 25 wherein said sensing means includes capacitive coupling means.

33. The machine according to claim 32 wherein said stationary sensing means includes first and second coaxial circumferential arrays of capacitive plate means and wherein said opposed arm portions are of different length with each of said arm portions having a capacitor plate member at the end thereof, one of said capacitor plate members coacting with one of said circumferential arrays and the other of said capacitor plate members coacting with the other of said circumferential arrays.

34. In a direct current machine, the combination comprising a permanent magnet rotor means having a rotor shaft; commutator means including optical sensing means; switch means; stator means including a plurality of poles, each pole including a winding set of a plurality of windings said windings being tapped at selected points, said taps being electrically connected to said switch means; and means interconnecting said commutator means and said switch means for enabling varying the effective

15       EP 0 462 340 A1       16

number of turns of the pole whereby to alter the operating characteristics of said machine.

9

FIG. 1

FIG. 2

FIG. 3

FIG. 4

EP 0 462 340 A1

FIG. 7

FIG. 5

FIG. 6

FIG. 8

FIG. 9

FIG. 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 371 797 (ARTUS) <br> * page 4, line 9 - page 6, line 35; figures 1-4 * <br> – – – | 1,21 | H 02 K 25/00 <br> H 02 K 23/62 |
| X | DE-A-3 320 555 (M. STEGMANN, UHREN- UND ELEK-TROAPPARATEFABRIK) <br> * the whole document * <br> – – – | 1,21 | |
| X | FR-A-1 457 668 (CSF) <br> * page 1, right-hand column, paragraph 7 - page 2, left-hand column, last paragraph; figures 1-3 * <br> – – – | 25 | |
| X | DE-A-2 258 361 (MITSUMI ELECTRIC) <br> * page 5, last paragraph - page 8, paragraph 1; figures 1, 7 * <br> – – – | 25 | |
| X | GB-A-1 048 471 (MINISTER OF AVIATION) <br> * the whole document * <br> – – – | 34 | |
| A | FR-A-2 365 908 (AGENCE NATIONALE DE VALORISA-TION DE LA RECHERCHE) <br> * page 3, line 29 - page 5, line 16; figure 1 * <br> – – – | 1,21 | |
| A | DE-A-2 822 566 (H. H. ROTTMERHUSEN) <br> * page 3, paragraph 5 * * page 5, paragraph 2; figures 2-4 * <br> – – – | 1,21 | **TECHNICAL FIELDS SEARCHED (Int. Cl.5)** <br><br> H 02 K 23/00 <br> H 02 K 25/00 |
| A | AT-B-2 510 96 (N.V. PHILIPS' GLOEILAMPEN-FABRIEKEN) <br> * page 2, line 22 - page 3, line 28; figures 1, 6 * <br> – – – | 34 | |
| A | US-A-3 257 594 (R. M. WEIGEL) <br> * column 3, line 39 - column 5, line 11; figures 1-3 * <br> – – – – – | 34 | |

The present search report has been drawn up for all claims

| Place of search | Date of completion of search | Examiner |
|---|---|---|
| Berlin | 15 February 91 | GESSNER E A F |